# EUROPEAN PATENT APPLICATION

(11) **EP 2 093 964 A1**
(43) Date of publication of application: **26.08.2009**
(21) Application number: 08003153.7
(22) Date of filing: 21.02.2008
(51) Int. Cl.: H04L 29/06, H04L 12/24

(54) **Method for dynamic configuration of application components**

(71) Applicant: SIEMENS AKTIENGESELLSCHAFT, 80333 München (DE)
(72) Inventor: Ferralasco, Daniela, 16136 Genova (IT); Costanzo, Luca, 1127 Genova (IT)
(74) Representative: Kley, Hansjörg

(57) **Abstract**

Method for dynamic configuration of an application component 6, comprising the steps of, issuing a request by the application component 6 to a configuration server 1 to load the application component 6 which resides on a component server 5, retrieving 8 public configurable parameters of the application component 6 from a database 4 by the configuration server 1, dynamically creating on the configuration server 1 a custom user interface 2 containing user editable fields associated with the application component 6, each of the user editable fields being set with a value of one of the retrieved public configurable parameters, inputting values for at least one of the public configurable parameters by a user and storing the values for the public configurable parameters on the configuration server 1.

## Description

The invention relates to a method for dynamic configuration of application components according to claim 1, especially for a suite of components composed of one or more entities like a production manager, a personnel manager and/or a material manager.

The usage of suites of components requires configuration of various parameters, of which some are global, meaning they are applied for all components, while some are specific to a single component. Present solutions use dedicated entry points for each configurable component and an entry point for configuring the global parameters, the entry point denoting a way of accessing components in order to configure them for the first time, like for example graphical user interfaces. This approach makes it complicated to develop such a suite of components because the programming effort for implementing several entry points augments. Furthermore, a user has to perform several steps for each entry point in order to configure a totality of components.

One goal to be achieved is to be seen in providing a method for dynamic configuration of application components, whereby a solution for reducing the number of entry points to a single entry point is sought.

One way the goal is achieved is by providing a method for dynamic configuration of an application component, comprising the steps of,
a) issuing a request by the application component to a configuration server to load the application component which resides on a component server,
b) retrieving public configurable parameters of the application component from a database by the configuration server,
c) dynamically creating on the configuration server a custom user interface containing user editable fields associated with the application component, each of the user editable fields being set with a value of one of the retrieved public configurable parameters,
d) inputting values for at least one of the public configurable parameters by a user,
e) storing the values for the public configurable parameters on the configuration server.

An example for the application component and the public configurable parameters is loading a certain plug-in, being the application component, needed by an internet browser in order to play a video file, the plug-in requiring information about allowing an end-user to save the video file or not.

The most important advantage of the proposed method lies in a high degree of flexibility in terms of adaptation of a system implementing the method, for managing arbitrary types of application components by providing a single interface to a user for configuration of the totality of the components. Another advantage is a significant reduction of development time for proprietary configuration tools used for each of the application components.

Features and advantages of the present invention will become more apparent from the following detailed description in conjunction with the following figures and example, whereby:

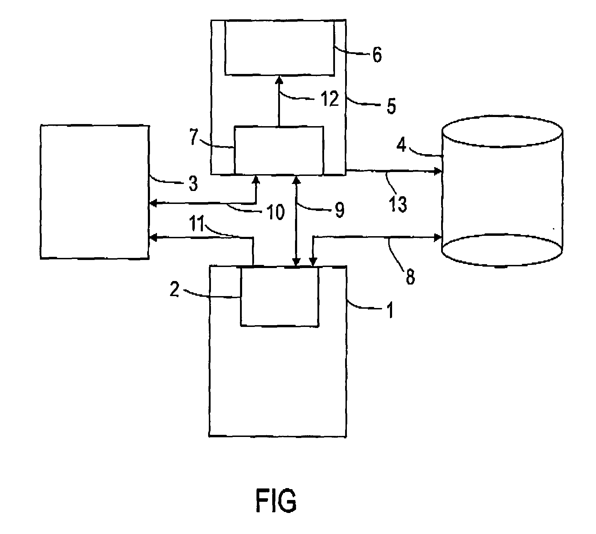

- Figure 1:: Example of a network utilizing a dynamic configuration of application components.

Figure 1 shows an example of a network utilizing a dynamic configuration of application components. A component server 5 comprises an application component 6 and a dynamic link library (dll ) 7. The dll 7 forwards values of configured parameters to the application component 6 through the path 12. The component server is connected through a path 10 to a discovery server 3. As the inward arrow to the component server 5 shows, the dll 7 communicates with the discovery server 3 in order to retrieve load information and network address of a configuration server 1 which comprises a custom user interface 2. The configuration server 1 transmits its own network location to the discovery server 3 by means of a path 11. It furthermore communicates with the dll 7 by means of a path 9 on order to provide to the dll 7 requested values of the public configurable parameters, the said parameters being stored by the configuration server 1 in a database 4 in case an administrator has changed any of the parameters by means of the custom user interface 2 . The parameters are retrieved from the database in order to provide to the dll 7 the requested values of the parameters. Upon a successful loading of the application component 6, the dll 7 stores the parameters into the database 4.

During an initialization phase of the dynamic configuration, the configuration server 1 transmits 11 a configuration server network location address to a discovery server 3. A dynamic link library 7 residing on the component server 5 retrieves 10 the configuration server network location address and additional connection procedure information to the configuration server 1 from the discovery server 3 upon the request to load the application component 6 issued by the configuration server 1. In other words, the discovery server 3 acts as a main storage for location information of all configuration servers present in a network. The dynamic link library (dll) 7 takes over all tasks which are necessary to load application components. An important step is retrieving the server network location address by the dll 7, together with additional information of how a connection to the configuration server 1 is to be established, in order to retrieve public configurable parameters for the component 6, the step having the advantage of decoupling the configuration server 1 from a totality of component servers 5, thus, reducing the amount of maintenance effort in case network configurations are changed, component servers are migrated to different locations, etc. The dll 7 retrieves 9 the values of the configured parameters by issuing a request to the configuration server 1 and forwards 12 them to the application component 6. Whenever a request for loading an application component is issued by an application, the dll retrieves, after connecting to the configuration server 1, all information related to parameters required for the application component, the information having been previously configured and stored by the configuration server 1 in the database 4. The dll then provides these parameters to the component in order for the said component to be loaded correctly by the application.
A custom user interface (UI) 2 is adaptable to provide user access to specific sets of the public configurable parameters associated with the application component 6. The user interface, which resides on the configuration server 1, serves to configure the parameters for each application component for example by a network administrator. Once the parameters have been configured, they are stored in the database 4 such that a next load request can automatically be carried out without a repeated configuration.
The user access is granted by dynamically creating a tab for each available component. The user, thus the network administrator in this example, accesses the parameters by being provided with a tab, in other words a software button added by an underlying software of the user interface, which, upon pressing, reveals a totality of the user editable fields to the administrator. As said above, this way of adjusting to different application components and their requirements is highly straightforward for the administrator, who only has to deal with a single platform for changing parameters.
The public configurable parameters corresponding to the application component 6 are transferred 13 to the database 4 as soon as the application component 6 is made available for use on component server. A correct configuration of the parameters for the component results in a successful loading of the component. This configuration is then stored in the database 4 directly by the dll in order to be used for subsequent component load procedures. The advantage is that this procedure insures an always up-to-date configuration available in the database 4.
In case the component is new and has never been loaded before, the public configurable parameters are stored in the database 4 with corresponding default values. This allows a load attempt of the component with predefined values, not requiring administrator interaction in case the load attempt is successful.
If the load attempt is unsuccessful, an application component load error and a set of public configurable parameters associated with the load attempt of the component 6 are both reported to the configuration server 1. This way the administrator is warned about a failure and has the possibility to check the parameters and adjust them.

### List of Abbreviations

- 1: = Configuration Server
- 2: = Custom User Interface
- 3: = Discovery Server
- 4: = Database
- 5: = Component Server
- 6: = Application Component
- 7: = Dynamic Link Library
- 8: = Path between 2 and 4 to retrieve public configurable parameters
- 9: = Path between 2 and 7 to retrieve values of the configured parameters
- 10: = Path between 7 and 3 to retrieve the own network location address of 1
- 11: = Path between 2 and 3 to transmit the own network location address of 1
- 12: = Path between 7 and 6 to forward the values of the configured parameters to 6
- 13: = Path between 5 and 4 to transfer the public configurable parameters to 4

## Claims

1. Method for dynamic configuration of an application component (6), comprising the steps of,
a) issuing a request by the application component (6) to a configuration server (1) to load the application component (6) which resides on a component server (5),
b) retrieving (8) public configurable parameters of the application component (6) from a database (4) by the configuration server (1),
c) dynamically creating on the configuration server (1) a custom user interface (2) containing user editable fields associated with the application component (6), each of the user editable fields being set with a value of one of the retrieved public configurable parameters,
d) inputting values for at least one of the public configurable parameters by a user,
e) storing the values for the public configurable parameters on the configuration server (1).

2. Method according to claim 1, whereby during an initialization phase of the dynamic configuration the configuration server (1) transmits (11) a configuration server network location address to a discovery server (3).

3. Method according to claim 2, whereby a dynamic link library (7) residing on the component server (5) retrieves (10) the configuration server network location address and additional connection procedure information to the configuration server (1) from the discovery server (3) upon the request to load the application component (6) issued by the configuration server (1).

4. Method according to claim 3, whereby the dynamic link library (7) retrieves (9) the values of the configured parameters by issuing a request to the configuration server (1) and forwards (12) them to the application component (6).

5. Method according to one of the preceding claims, whereby the custom user interface is adaptable to provide user access to specific sets of the public configurable parameters associated with the application component (6).

6. Method according to claim 5, whereby the user access is granted by dynamically creating a tab for each loaded application component.

7. Method according to one of the preceding claims, whereby the public configurable parameters corresponding to the application component (6) are transferred (13) to the database (4) as soon as the application component (6) is made available for use on component server.

8. Method according to one of the preceding claims, whereby the public configurable parameters are stored in the database (4) with corresponding default values.

9. Method according to one of the preceding claims, whereby an application component load error and a set of public configurable parameters associated with a load attempt of the application component (6) are both reported to the configuration server (1).
